# EUROPEAN PATENT APPLICATION

(11) **EP 3 696 115 A1**
(43) Date of publication of application: **19.08.2020**
(21) Application number: 19157213.0
(22) Date of filing: 14.02.2019
(51) Int. Cl.: B65G 1/00, B65G 1/04

(54) **STORAGE SYSTEM COMPRISING SERVICE UNIT**

(71) Applicant: Logevo AB, 34324 Älmhult (SE)
(72) Inventor: Persson, Patrik, 343 24 Älmhult (SE)
(74) Representative: Hansson Thyresson AB

(57) **Abstract**

A storage system for handling and storing goods is provided, which storage system comprises a framework of longitudinal beams and horizontal beams forming storage levels and storage rows; and a service unit (27) arranged in connection with the framework and configured to transport people and machinery into the storage system.

## Description

### TECHNICAL FIELD

The present invention relates to a storage system provided with a service unit, and a method for performing service to such storage system.

### BACKGROUND

Goods storage systems today tend to grow larger and get more automated, requiring less manual handling. Often the storage system is an arrangement of storage levels and storage rows creating a complex system. Thus, there is a need for an efficient system for installing, or building, the storage system, as well as handling maintenance of the storage system in operation. For example, maintenance workers may have to use ladders, or climb onto the storage racks themselves in order to get into the system and perform maintenance work. Alternatively, sky lifts are used. But, also from a sky lift, it may be difficult to reach all parts of the system, and the worker may have to leave the sky lift in order to be able to perform the work. This exposes the maintenance worker for dangerous situations, such as the risk of falling.

From the above it is understood that there is room for improvements and the invention aims to solve or at least mitigate the above and other problems.

### SUMMARY

An object of the present invention is to provide a new type of storage system which is improved over prior art, and which eliminates or at least mitigates the drawbacks discussed above. More specifically, an object of the invention is to provide a storage system with a service unit that allows for servicing the storage system in an efficient manner without closing down the entire storage system, and without exposing service workers for risks or danger. These objects are achieved by the technique set forth in the appended independent claims with preferred embodiments defined in the dependent claims related thereto.

According to a first aspect, the above problems are solved by a storage system for handling and storing goods, comprising a framework of longitudinal beams and horizontal beams forming storage levels and storage rows; and a service unit arranged in connection with the framework and configured to transport people and machinery in connection with the storage system. This system is advantageous in that it comprises a service unit by which both people and machinery can be transported into and out of the system. The service unit is an integrated part of the system which means that it has its dedicated position, and it is not disturbing the normal activity going on in the system.

According to one embodiment, the service unit comprises a service elevator and a service tower comprising longitudinal beams and horizontal beams arranged in connection with the framework beams of the storage system. This service elevator is arranged in the service tower. It is preferred to have an elevator installed in the service tower of the service unit, since this is an efficient way of transporting machinery and people into the storage system.

Preferably, the longitudinal beams of the service tower comprise a toothed rack, and the service elevator comprises an elevator platform provided with drive wheels configured to interact with the toothed rack. This is an advantageous way of moving the elevator platform within the service tower.

In one embodiment, the service unit further comprises a drive unit configured to drive said drive wheels in order to raise and lower the elevator platform. Advantageously, the drive wheels interacting with the toothed rack provides a precise way of maneuvering the platform to match the position of a level of the storage system.

At least one level of at least one row of the storage system may comprise at least one elongate rail unit extending along said row, on which rail unit a transportation unit is configured to operate. The elevator platform may be provided with rail portions arranged to be an extension of the rail unit of the storage system when the elevator platform is in level with said level of said row of the storage system. Thus, rail bound or rail mounted machinery may be easily transferred between the elevator platform and the storage system.

In one embodiment, the service unit further comprises sensors for determining the position of the service elevator in relation to the framework of the storage system. This is advantageous when displacing or moving the elevator platform within the service tower. If the height of a storage level changes, the platform will level up with the new height thanks to the sensors, instead of travelling to the original height of the level. This could be a problem when rail is used on the elevator platform, where a compliance between the elevator platform and the storage level rail is an important factor.

The service unit may further comprise a control system comprising a control unit and the sensors, the control system being configured to connect and control a motor and the drive wheels. A control system provides an advantageous way of controlling and maneuvering the elevator platform.

Preferably, the storage system comprises at least two storage sections with a transportation aisle provided therebetween, and the service unit is preferably arranged at least partly above ground level in connection with the transportation aisle. It is advantageous to arrange the service unit at least partly a certain distance above ground level, thus machinery can operate below the service unit without any interference.

In a second aspect, a method for providing service to a storage system is provided. The method comprises the steps of:
- maneuvering an elevator platform of the service unit to at least substantially align with a predetermined storage level of the storage system;
- transferring a transportation unit from the predetermined level of the storage system onto the elevator platform, or transferring a transportation unit or a worker from the elevator platform into the storage system;
- performing service on the transportation unit, or performing service within the storage system;
- transferring the serviced transportation unit from the elevator platform into the storage system, or transferring the worker from the storage system onto the elevator platform;
- maneuvering the elevator platform to ground level allowing workers to step off; and
- maneuvering, automatically or manually, the elevator platform to an idle position located above ground level.

The system is advantageous in that it is easy to install, and by the method it is easy to exchange and perform service or maintenance work on the components therein. The service tower with the service elevator enhances the efficiency of the storage system since only one storage level needs to be closed when service is performed. In other systems, the whole system needs to be closed in order to perform service.

In previous storage systems, workers and material have either been hoisted by means of suspended platforms or by cranes. These are unstable and may expose the workers to danger due to the height (up to 25 meters). Therefore, this solution is advantageous in that the elevator is secured in all four corners, which provides for a stable, safe and secure working environment.

### BRIEF DESCRIPTION OF THE DRAWINGS

Embodiments of the invention will be described in the following; references being made to the appended diagrammatical drawings which illustrate non-limiting examples of how the inventive concept can be reduced into practice.
Fig. 1 is a perspective view of an assembly of a first storage row with multiple storage levels of a storage system;
Fig. 2 is a schematic cross sectional front view of several storage levels of the storage system in Fig. 1;
Fig. 3 is a perspective view of two storage sections and an intermediate transportation aisle;
Fig. 4 is a top view of a storage system;
Fig. 5 is a perspective view of a service tower;
Fig. 6 is a top view of the service tower in Fig. 5;
Fig. 7 is an isometric view of a part of the service tower in Figs 5-6;
Fig. 8 is a perspective view of a portion of a longitudinal beam provided with a toothed rack according to a detail of Fig. 5;
Fig. 9 is a perspective view of an elevator cage; and
Fig. 10 is a perspective, partly sectioned, view of an elevator platform.

### DETAILED DESCRIPTION

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art. If nothing else is stated, different embodiments may be combined with each other.

Illustrated in the drawings is a storage system 1 for handling and storing different types of pallets and goods 10.

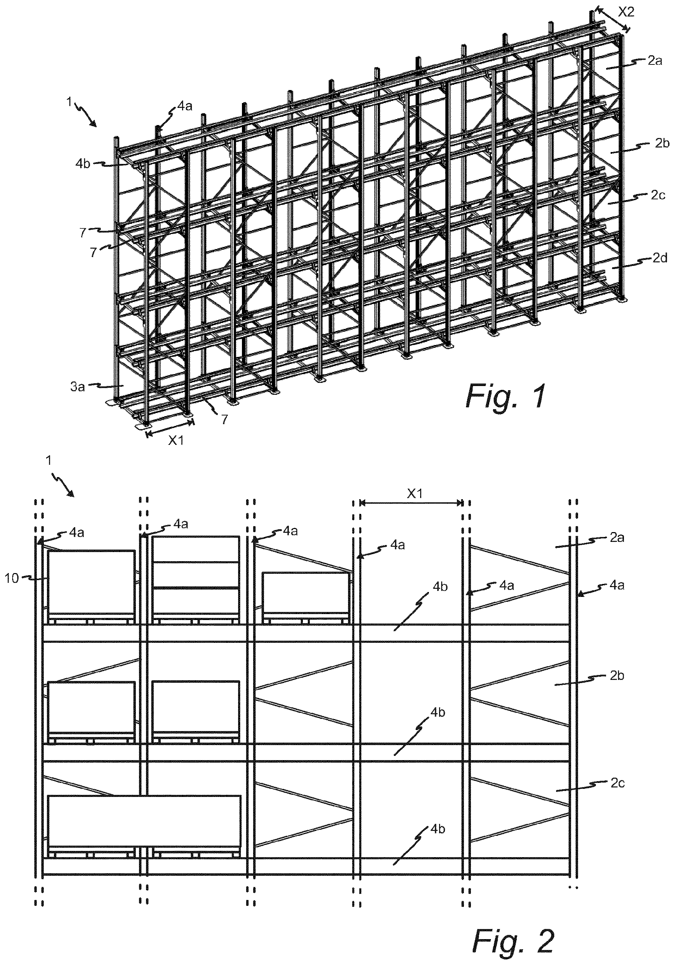

The storage system 1, as shown in Figs 1-4, is constructed by means of longitudinal beams 4a and horizontal beams 4b to form a framework. The framework comprises several storage levels 2a-d, several storage rows 3a-c, and preferably several storage sections 5a-b. The storage sections 5a-b are separated by transportation aisles 6a-c in which goods 10 are transported to and from their storage location. Each storage row 3a-c on each storage level 2a-d is preferably provided with rail units 7 for the transportation unit 8 to travel along. The storage system 1 may in other embodiments be constructed differently, in order to adapt to the location, the type of goods to be stored therein and the size of the storage system 1.

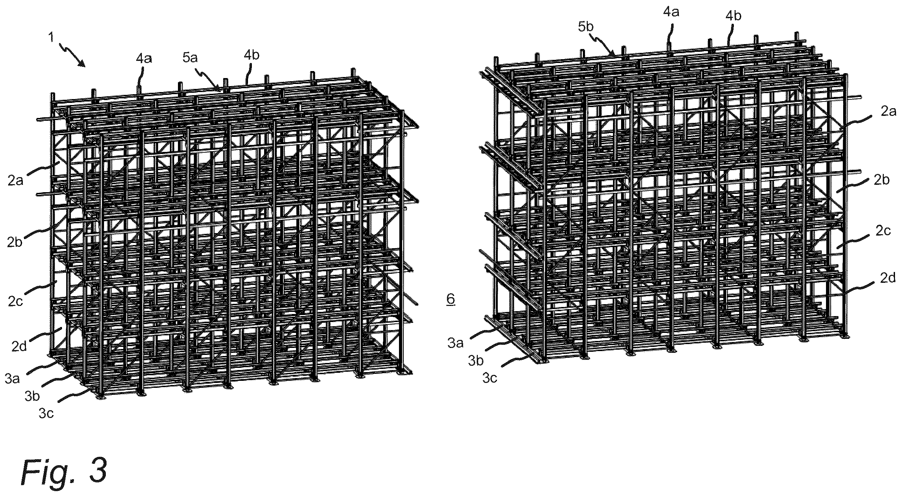

The transportation aisles 6 are designed to support different types of transportation units 8. One type of transportation unit 8 is a supply transfer cart for transporting goods 10 to be supplied within the storage system 1, and another type of transportation unit is a picker transfer cart for transporting picked up goods 10 from within the storage system 1. Further, the transportation aisles 6 are arranged perpendicular to the extension of the storage rows 3a-c, as seen in Figs 3-4.

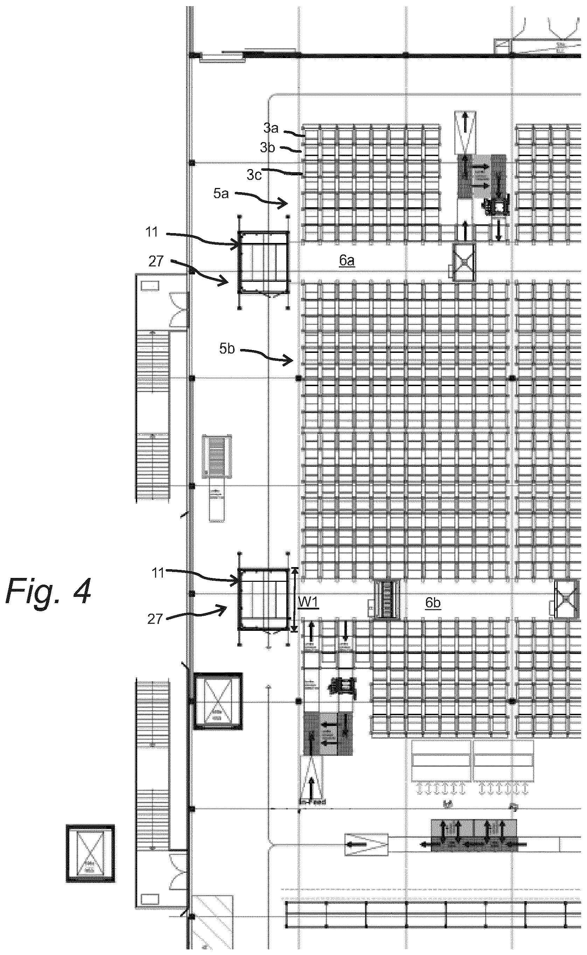

With reference to Figs 4-7, the system 1 is further provided with a service tower 11, preferably arranged in an end portion of a transportation aisle 6. The storage system may comprise several service towers 11, e.g. one service tower 11 per storage section 5a-b, or one service tower per storage row 3a-c, or any other suitable distribution. In Fig. 4, the system 1 is provided with one service tower 11 per transportation aisle 6. The tower 11 is arranged in one end of each transportation aisle 6.

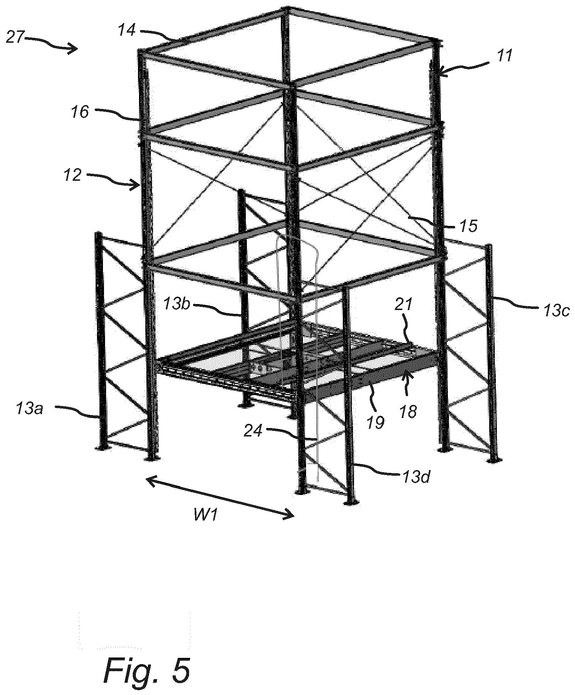

The service tower 11 is shown in Figs 5-7. It comprises a main pillar 12, comprising longitudinal beams 16 and horizontal beams 14, and additional support racks 13a-d. The support racks 13a-d provide additional strength to the construction in order to reduce stress. The height of the support racks 13a-d depends on the total height of the storage system 1. One example of the height of the support racks 13a-d is about 3.5 meters.

The dimensions of the main pillar 12 correspond to those of the rest of the storage system 1. Thus, the horizontal beams 14 of the main pillar 12 match the storage levels 2a-d of the storage system 1. The main pillar 12 is further provided with support struts 15 at suitable locations. The height of the service tower 11 is preferably the same as the height of the storage system 1. The width W1 of the service tower 11 is approximately the same width as the transportation aisle 6, in the shown embodiment the width W1 is somewhat larger compared to the width of the transportation aisles 6a-b (see Fig. 4). Optionally, the service tower 11 is provided with security fencing (not shown), preferably from 3.5 meters above the ground and upwards.

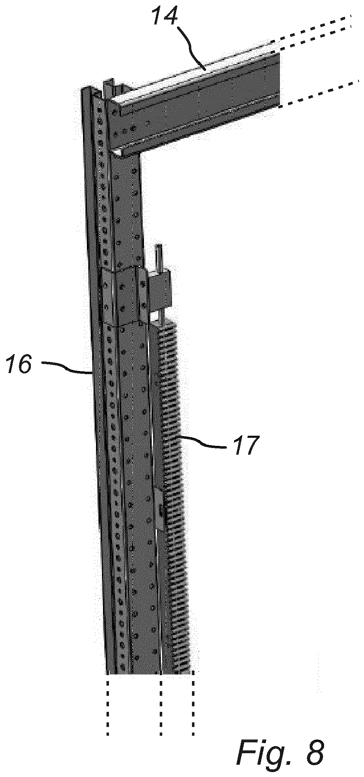

A portion of one of the longitudinal beams 16 is shown in Fig. 8. A toothed rack, or gear rack, 17 is provided in connection with the longitudinal beam 16. Preferably, the toothed rack 17 is attached in parallel with the longitudinal beam, and preferably along the main part of the beam 16. All longitudinal beams 16 of the service tower 11 are provided with such toothed racks 17.

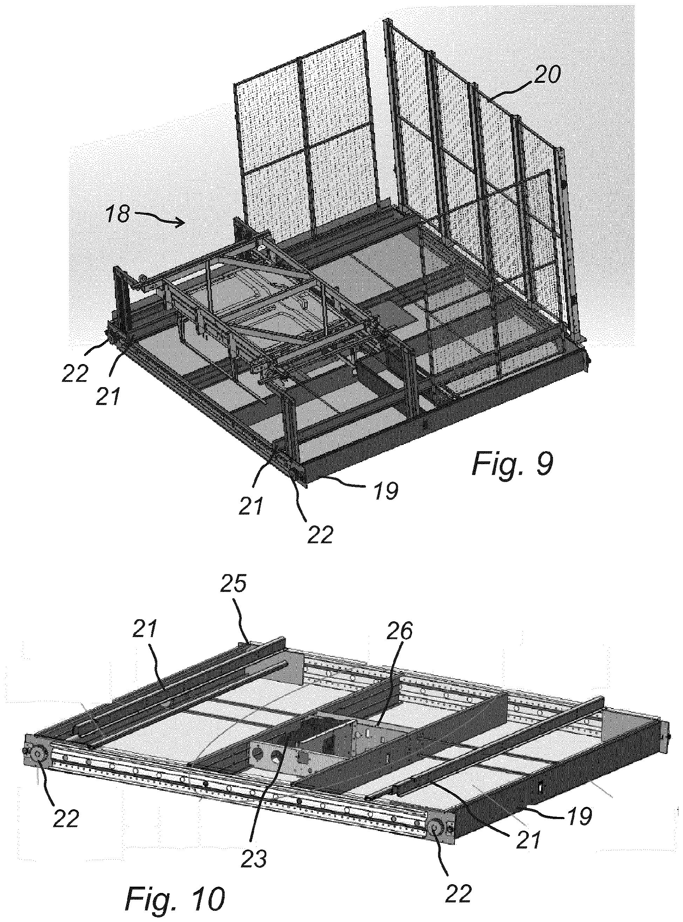

Fig. 9 shows a service elevator 18 according to one embodiment. The elevator 18 comprises a platform 19 and a protective caging, or fencing, 20 along one or more sides of the platform 19.

The elevator platform 19, as shown in detail in Figs 9-10, comprises rail portions 21. The rail portions 21 extend in the same direction as the rail units 7 of the storage system 1. The platform 19 is also provided with drive wheels 22, preferably one wheel 23 in each corner of the platform 19, configured to interact with the toothed rack 17 of the service tower 11. The platform 19 also comprises a drive unit 23, e.g. a motor, arranged to drive the drive wheels 22. The motor 23 is provided with electricity via an electrical cable chain 24 (shown in Fig. 5) arranged along one of the longitudinal beams 16 of the service tower 11. Sensors 25 are provided on the service elevator 18 in order to register the position of the elevator 18. The sensors 25 may be any type of suitable conventional sensor.

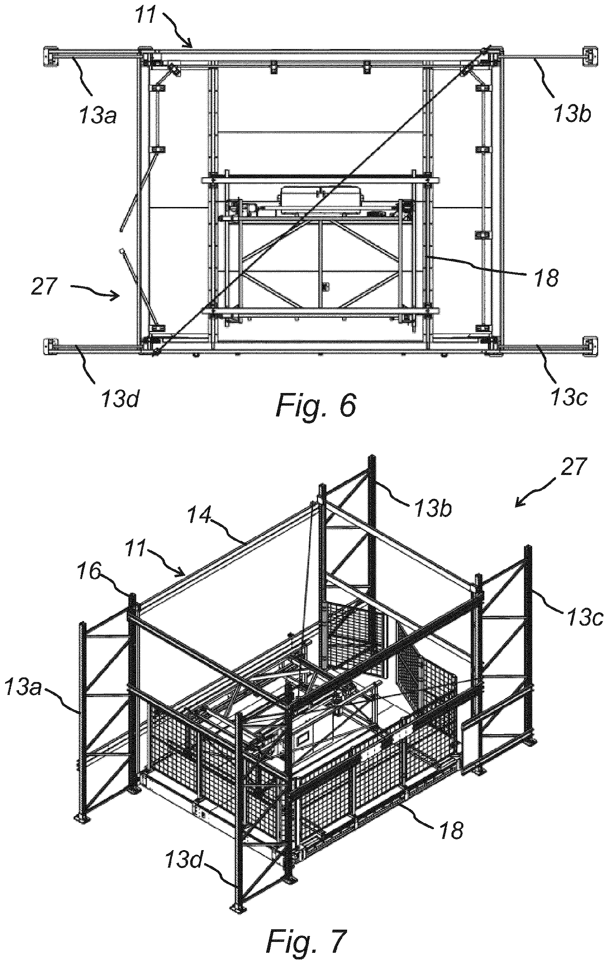

The service elevator 18 is configured to be mounted in the service tower 11, as shown in Figs 7 and 9. It is further configured to travel along the extension of the longitudinal beams 16 of the service tower 11 in order to reach the different levels 2a-d of the storage system 1. Thereby, machinery and service personnel are transported in a safe manner throughout the storage system.

When arranged in the storage system, the drive wheels 23 of the elevator 18 are configured to interact with the toothed racks 17, and thereby, when the drive wheels 23 rotate, drive the service elevator 18 upwards or downwards along the extension of the service tower 11.

Firstly, the service elevator 18 is configured to be used when installing the storage system 1. Components to be mounted in the system 1 can be brought to the right level by means of the service elevator 18. Also, construction workers may use the service elevator 18 to transport themselves to the level 2a-d where they are going to work.

Secondly, the service elevator 18 is configured to be used for maintenance work when the storage system 18 is in operation. For example, maintenance workers can use the service elevator 18 to transport themselves to a level 2a-d where maintenance is required.

One example is when one of the transportation units 8 needs maintenance. In this case, the service elevator 18 is brought to the level 2a-d where the transportation unit 8 is located. Preferably, the elevator 18 is maneuvered from the elevator platform 19, optionally with security grip in order to reduce the risk of clamping or crushing accidents.

The sensors 25 determine the position of the platform 19 and the elevator 18 is brought to a stop when the platform 19 complies with the predetermined level 2a-d, such that the rail unit 7 of the level 2a-d levels up with the rail portions 21 of the platform 19. Then, the transportation unit 8 in need of service is maneuvered onto the platform 18, by means of the rails. The maintenance workers can perform the maintenance on the transportation unit 8 while being on the service elevator 18. There is no need to bring the transportation unit 8 to the ground level unless the extent of the maintenance requires so, e.g. in the case of a complete exchange of the transportation unit 8.

During this work, the current level 2a-d is being shut down for security reasons. Since the platform 18 is not on ground level, there is no need for the rest of the storage system 1 to be shut down. Oppositely, the work can continue below the elevator platform 18, e.g. trucks can drive along the transportation aisle 6 while the service elevator 18 is located above. When the maintenance work is completed, the elevator is brought down to ground level, and the workers leave the platform 19.

Then, the service elevator 18 is, optionally automatically, brought to its idle position, which is located approximately 4 meters above the ground level. Thus, it is not in the way for the normal activity in the storage system 1. Since the idle position is located on 4 meters height, trucks can pass below it without interference.

The service unit is further provided with a control system 26 comprising a control unit and the sensors 25. The control system 26 is arranged to control the motor 23 and the drive wheels 22. The control system 26 is a conventional control system suitable for controlling elevator platforms, either manually automatically or a combination thereof.

## Claims

1. A storage system for handling and storing goods, comprising:
a framework of longitudinal beams (4a) and horizontal beams (4b) forming storage levels (2a-d) and storage rows (3a-c); and
a service unit (27) arranged in connection with the framework and configured to transport people and machinery in connection with the storage system (1).

2. The storage system according to claim 1, wherein the service unit (27) comprises a service elevator (18) and a service tower (12) comprising longitudinal beams (16) and horizontal beams (14) arranged in connection with the framework beams (4a, 4b) of the storage system (1), wherein the service elevator (18) is arranged in the service tower (12).

3. The storage system according to claim 2, wherein the longitudinal beams (16) of the service tower (12) comprise a toothed rack (17), and the service elevator comprises an elevator platform (19) provided with drive wheels (22) configured to interact with the toothed rack (17).

4. The storage system according to claim 3, wherein the service unit (27) further comprises a drive unit (23) configured to drive said drive wheels (22) in order to raise and lower the elevator platform (19).

5. The storage system according to claim 3 or 4, wherein at least one level (2a-d) of at least one row (3a-c) of the storage system (1) comprises at least one elongate rail unit (7) extending along said row (3a-c), on which rail unit (7) a transportation unit (8) is configured to operate, and wherein the elevator platform (19) is provided with rail portions (21) arranged to be an extension of the rail unit (7) of the storage system (1) when the elevator platform (19) is in level with said level (2a-d) of said row (3a-c) of the storage system (1).

6. The storage system according to any of the claims 2-5, wherein the service unit (27) further comprises sensors (25) for determining the position of the service elevator (18) in relation to the framework of the storage system (1).

7. The storage system according to claim 6, wherein the service unit (27) further comprises a control system (26) comprising a control unit and the sensors (25), the control system (26) being configured to connect and control a motor (23), the drive wheels (22).

8. The storage system according to any of the preceding claims, wherein the storage system (1) comprises at least two storage sections (5a, 5b) with a transportation aisle (6) provided therebetween, and wherein the service unit (27) is arranged at least partly above ground level in connection with the transportation aisle (6).

9. A method for providing service to a storage system according to any one of the preceding claims, comprising the steps of:
- maneuvering an elevator platform (19) of the service unit (27) to at least substantially align with a predetermined storage level (2a-d) of the storage system (1);
- transferring a transportation unit (8) from the predetermined level (2a-d) of the storage system (1) onto the elevator platform (19), or transferring a transportation unit (8) or a worker from the elevator platform (19) into the storage system (1);
- performing service on the transportation unit (8), or performing service within the storage system (1);
- transferring the serviced transportation unit (8) from the elevator platform (19) into the storage system (1), or transferring the worker from the storage system (1) onto the elevator platform (19);
- maneuvering the elevator platform (19) to ground level allowing workers to step off; and
- maneuvering, automatically or manually, the elevator platform (19) to an idle position located above ground level.
